# EUROPÄISCHE PATENTANMELDUNG

(11) **EP 1 103 821 A2**
(43) Veröffentlichungstag der Anmeldung: **30.05.2001**
(21) Anmeldenummer: 00120400.7
(22) Anmeldetag: 18.09.2000
(51) Int. Cl.: G01S 5/16

(54) **Überwachungsanlage**

(30) Priorität: 23.11.1999 DE 19956266
(71) Anmelder: Schütz Dich Entwicklungs-& Vertriebs GmbH, 89423 Gundelfingen (DE); RST Rostock Raumfahrt und Umweltschutz GmbH, 18119 Warnemünde (DE)
(72) Erfinder: Junginger, Markus Götz, 89429 Bachhagel (DE); Luth, Wolfgang, Dr., 18059 Papendorf (DE); Luth, Nailja, Dr., 18059 Papendorf (DE)
(74) Vertreter: Laufhütte, Dieter, Dr.-Ing.

(57) **Zusammenfassung**

Die vorliegende Erfindung betrifft eine Überwachungsanlage zur Überwachung von Räumen und Erfassung sich darin bewegender Objekte. Die Überwachungsanlage zeichnet sich erfindungsgemäß aus durch eine stereoskopische Kamera zur Erfassung stereoskopischer Bilder des überwachten Raumes, eine Verfolgungskamera, eine Schwenkvorrichtung zum Schwenken der Verfolgungskamera, einer Einrichtung zur Bestimmung der Raumposition des erfaßten Objekts aus den stereoskopischen Bildern und eine Steuereinrichtung zur Ansteuerung der Schwenkvorrichtung in Abhängigkeit der erfaßten Raumposition derart, daß die Verfolgungskamera das erfaßte Objekt verfolgt.

## Beschreibung

Die vorliegende Erfindung betrifft eine Überwachungsanlage zur Überwachung eines Raumes, insbesondere zur Erfassung von Fremdobjekten in dem überwachten Raum. Der überwachte Raum kann sowohl ein Innenraum als auch ein vorgegebener Raum in Freilichtumgebungen sein.

Mit Hilfe derartiger Überwachungsanlagen werden z. B. Grundstücke oder Firmengelände videoüberwacht. In den überwachten Raum eindringende Objekte, insbesondere Menschen, werden von der Überwachungsanlage erfaßt und auf einem Überwachungsbildschirm angezeigt, um entsprechende Maßnahmen veranlassen zu können. Ein Problem besteht hierbei zum Teil darin, daß auch große Areale mit möglichst wenig Kameras überwacht werden sollen, andererseits erfaßte Objekte möglichst aus der Nähe zu sehen sein sollen. Ein weiteres Problem besteht darin, daß in der Überwachungszentrale nur interessierende Objekte angezeigt und/oder gespeichert werden sollen, während z.B. kleine Eindringlinge wie Mäuse und dergleichen nicht weiter beachtet werden sollen und die Überwachungszentrale hiermit am besten gar nicht belästigt wird.

Der vorliegenden Erfindung liegt daher die Aufgabe zugrunde, eine intelligente Überwachungsanlage zu schaffen, die die Nachteile aus dem Stand der Technik bekannter Anlagen vermeidet. Insbesondere soll mit einfachen Mitteln eine präzise und zuverlässige Überwachung der entsprechenden Areale erreicht werden.

Gelöst wird diese Aufgabe erfindungsgemäß durch eine Überwachungsanlage mit einer stereoskopischen Kamera zur Erfassung stereoskopischer Bilder des überwachten Raumes, einer Verfolgungskamera, einer Schwenkvorrichtung zum Schwenken der Verfolgungskamera, einer Einrichtung zur Bestimmung der Raumposition des erfaßten Objekts aus den stereoskopischen Bildern und einer Steuereinrichtung zur Ansteuerung der Schwenkvorrichtung in Abhängigkeit der erfaßten Raumposition derart, daß die Verfolgungskamera das erfaßte Objekt verfolgt.

Mit Hilfe der stereoskopischen Kamera wird das jeweilige Areal ständig überwacht, eindringende Objekte werden detektiert und die Raumposition des jeweiligen erfaßten Objekts wird automatisch bestimmt. Die ermittelte Raumposition dient zur automatischen Navigation der Verfolgungskamera auf das Objekt. Die Stereokamera liefert in zeitlichen Abständen neue Bilder, die automatische Steuerung der Verfolgungskamera erfolgt mit jedem Bild, so daß das sich bewegende Objekt von der Kamera verfolgt wird. Die erfindungsgemäße Anordnung der Kameras überwacht ein Areal lückenlos durch die statische stereoskopische Kamera, erfaßt alle Situationsänderungen automatisch und löst die detektierten bewegten Objekte räumlich auf. Die Verfolgung und gegebenenfalls die Identifikation bewegter Objekte erfolgt mit Hilfe der Verfolgungskamera.

Die Überwachungsanlage sieht erstmals vor, aufgrund der Strukturanordnung der Videokameras die dritte Dimension eines zu überwachenden Areals passiv, d.h. ohne aktive Exposition von z.B. Laser- oder Radarsensorik zu überwachen.

In Weiterbildung der Erfindung wird die Größe des erfaßten Objekts bestimmt. Dies kann durch Auswertung der stereoskopischen Bilder und/oder der von der Verfolgungskamera erzeugten Bilder bewerkstelligt werden. In Abhängigkeit der bestimmten Größe sowie dem Abstand des erfaßten Objektes von der Verfolgungskamera wird dessen Brennweite eingestellt, so daß ein Bild des erfaßten Objektes im Detail erhalten wird und eine Identifikation des erfaßten Objektes möglich ist. Die Verfolgungskamera besitzt hierzu eine Zoom-Einrichtung zur Brennweiteneinstellung, die von der Steuereinrichtung der Überwachungsanlage entsprechend angesteuert wird. Dies besitzt den Vorteil, daß auch bei großen überwachten Arealen mit Hilfe weniger Kameras die jeweiligen Objekte im Detail erfaßt werden können.

In vorteilhafter Weise wird bei der Überwachungsanlage die Bewegungsgeschwindigkeit des jeweils erfaßten Objekts bestimmt und bei der Ansteuerung der Verfolgungskamera berücksichtigt. Die Schwenkgeschwindigkeit, mit der die Verfolgungskamera verschwenkt wird und/oder das Zoomen der Verfolgungskamera kann in Abhängigkeit der bestimmten Bewegungsgeschwindigkeit des erfaßten Objekts gesteuert werden. Hierdurch kann zuverlässig erreicht werden, daß das erfaßte Objekt stets großflächig mit der Verfolgungskamera erfaßt wird.

Insbesondere sind bei der Überwachungsanlage eine Mehrzahl von stereoskopischen Kameras und diesen zugeordneten Verfolgungskameras vorgesehen, wobei die überwachten Räume einander ergänzen und/oder sich überschneiden. Das insgesamt überwachte Areal wird also in mehrere Sektoren zu überwachender Räume aufgeteilt, die jeweils von einer Kameraanordnungs-Einheit bestehend aus einer stereoskopischen Kamera und einer oder mehrerer dieser zugeordneter Verfolgungskameras besteht. Zum einen können hierdurch auch sehr große Areale mit der erforderlichen Genauigkeit, zum anderen auch Areale, die nicht von einem einzigen Punkt aus einsehbar sind, überwacht werden.

Insbesondere zeichnet sich die Überwachungsanlage dadurch aus, daß die stereoskopischen Kameras und Verfolgungskameras untereinander durch ein dezentrales, neuronales Netz verknüpft sind. Den verschiedenen stereoskopischen Kameras und diesen zugeordneten Verfolgungskameras ist jeweils eine separate Steuereinrichtung zugeordnet, die miteinander verknüpft sind. Die jeweiligen Überwachungseinheiten, d.h. die jeweiligen stereoskopischen Kameras, die diesen zugeordneten Verfolgungskameras, Steuer- und Auswerteeinrichtungen bilden jeweils lernfähige Datenträger bzw. Knotenpunkte, die von in anderen Einheiten durchlaufenden Routinen lernen können. Die Informationen, die von einer Überwachungseinheit über ein erfaßtes Objekt gewonnen wurden, können von den anderen Überwachungseinheiten genutzt werden.

Durch das dezentrale, neuronale Netz mit dem die Kameras untereinander verknüpft sind, können die Bilddaten-Informationen dezentral verarbeitet und, ohne über eine Datenverarbeitungszentrale gehen zu müssen, vor Ort ausgewertet werden, um das Zentralen-Personal nicht mit unerwünschten Falschalarmen zu belästigen.

Insbesondere ist das neuronale Netzt derart ausgebildet, daß Bilddaten einer stereoskopischen Kamera und/oder einer Verfolgungskamera an eine nächstgelegene stereoskopische Kamera und/oder Verfolgungskamera weitergegeben werden. Der Begriff "Bilddaten" ist hierbei umfassend zu verstehen, neben den eigentlichen Bilddaten per se sind damit auch daraus gewonnene Informationen wie Größe, Raumposition und Geschwindigkeit des erfaßten Objekts gemeint. Die Auswahl der jeweils nächstgelegenen Kamera, an die die Bilddaten übergeben werden, erfolgt vorzugsweise in Abhängigkeit der Bewegungsrichtung des erfaßten Objekts ebenfalls dezentral.

Durch die dezentrale Übergabe der Bilddaten an die jeweils nächstliegende Kamera können beträchtliche Vorteile erreicht werden. Zum einen wird ein unwirtschaftlicher Weg zu einer Zentrale vermieden, es wird verhindert, daß widersprüchliche Informationen von mehreren Seiten an einen Zentralrechner gelangen. Zum anderen werden die anfänglichen Detektions- und Adaptionsroutinen eingespart, wenn ein erfaßtes Objekt in einen neuen Überwachungsbereich wandert. Die Videosensorik der nächsten Kamera muß nicht neu lernen und sich einstellen, die Anpassung der Systemparameter kann bereits aufgrund der Daten, die im vorhergehenden Abschnitt erfaßt bzw. bestimmt wurden, erfolgen, wenn das erfaßte Objekt in einen neuen Überwachungsbereich eindringt. Die Überwachung kann dementsprechend schneller, lückenlos und zuverlässig bewerkstelligt werden.

Die Anordnung der stereoskopischen Kameras kann verschieden getroffen, insbesondere an die Gegebenheiten des zu überwachenden Areals angepaßt sein. Gemäß einer bevorzugten Ausführung der Erfindung können benachbarte stereoskopische Kameras, d.h. die Kameras, die aneinander angrenzende Überwachungsräume beobachten, nebeneinander in zueinander parallelen Richtungen ausgerichtet sein.

Gemäß einer bevorzugten Ausführung der Erfindung können benachbarte stereoskopische Kameras zueinander entgegengerichtet angeordnet sein. Die genannten Anordnungen der stereoskopischen Kameras können auch miteinander kombiniert werden.

Um eine zuverlässige und fehlerfreie Objekterfassung zu erreichen, wird die Schwenkbewegung der jeweiligen Verfolgungskamera derart gesteuert, daß ihre Geschwindigkeit etwa der jeweiligen Bildauswertungsrate entspricht, mit der die Bilder der zugehörigen stereoskopischen Kamera ausgewertet werden. Diese kann fünf Bilder pro Sekunde betragen.

Gemäß einer bevorzugten Ausführung der Erfindung sind die Steuereinrichtung, die Einrichtung zur Bestimmung der Raumposition, die Einrichtung zur Bestimmung der Größe des erfaßten Objekts und die Einrichtung zur Bestimmung der Geschwindigkeit des erfaßten Objekts als Rechner und darin geladene Software ausgebildet. Jeder Überwachungseinheit bestehend aus einer stereoskopischen Kamera und einer bzw. mehrerer dieser zugeordneten Verfolgungskameras ist also ein Computer zugeordnet, der als Industrie-PC mit Festplatte, Anzeige- und Bedienperipherie sowie Betriebssystem in wetterfester Einhausung ausgebildet sein kann und mit Hilfe der entsprechenden Software die zuvor beschriebenen Funktionen verwirklicht.

In Weiterbildung der Erfindung ist an der Überwachungsanlage eine Benutzerschnittstelle vorgesehen, über die der Endanwender die Verfolgungsstrategie, nach der erfaßte Objekte von den Verfolgungskameras verfolgt werden, spezifizieren kann. Diese Verfolgungsstrategien können gegebenenfalls von dem Endanwender selbst zusammengestellt und als Steuerungsmodus in die Überwachungsanlage eingegeben werden. Vorzugsweise können bereits mehrere Steuerungsmodi in der Steuereinrichtung abgespeichert sein, aus denen der Endanwender lediglich den ihm passend erscheinenden auszuwählen braucht. Verschiedene Steuerungsmodi können vorgesehen sein. Ein bevorzugter Steuerungsmodus besteht darin, daß jedes bewegte Objekt durch die Verfolgungskamera erfaßt wird, wobei gegebenenfalls zwischen den bewegten Objekten sprunghaft hin und her geschalten wird. Eine weitere bevorzugte Ausführungsform besteht darin, daß die Verfolgung jeweils eines Objektes in Abhängigkeit von der Größe, Geschwindigkeit, Bewegungsrichtung und/oder Entfernung gestaltet wird. Bei gleichen Parametern wird gegebenenfalls nach dem zuvor beschriebenen Steuerungsmodus vorgegangen oder es wird das erste detektierte Objekt verfolgt, solange es sich im Sichtbereich der jeweiligen Stereokamera befindet.

Zweckmäßigerweise umfaßt jede der Steuereinrichtungen einen Speicher, um die relevanten Bilder und/oder Videosequenzen zu archivieren.

Um stets eine ausreichende Visibilität des überwachten Raumes zu erreichen, sind Beleuchtungsmittel vorgesehen, mit Hilfe derer der überwachte Raum beleuchtet werden kann. Insbesondere sind diese Beleuchtungsmittel derart ausgebildet, daß sie keine Netzfrequenz bedingten Helligkeitsschwankungen erzeugen, die einer zuverlässigen Objekterfassung abträglich wären.

Die Erfindung wird nachfolgend von Ausführungsbeispielen und zugehöriger Zeichnungen näher erläutert. In den Zeichnungen zeigen:
- Fig. 1: eine schematische Darstellung einer einzelnen Überwachungseinheit einer Überwachungsanlage mit einer stereoskopischen Kamera, einer Verfolgungskamera und einem Steuer- und Auswerterechner gemäß einer bevorzugten Ausführung der Erfindung,
- Fig. 2: eine schematische Darstellung zweier nebeneinander geschalteter Überwachungseinheiten, die einen Ausschnitt aus einem Netzwerk solcher Überwachungseinheiten einer Überwachungsanlage gemäß einer bevorzugten Ausführung der Erfindung bilden, und
- Fig. 3: eine schematische Ansicht zweier Überwachungseinheiten, die einander entgegengerichtet angeordnet sind und einen Teil eines Netzwerks solcher Überwachungseinheiten bilden, gemäß einer bevorzugten Ausführung einer erfindungsgemäßen Überwachungsanlage.

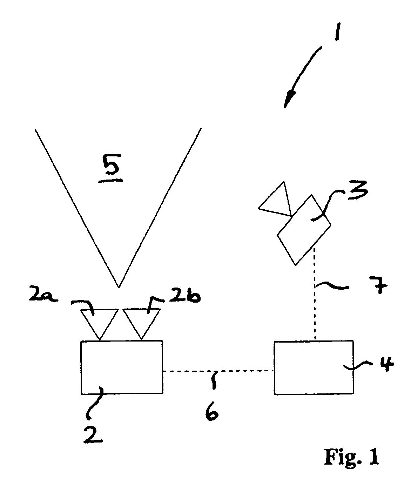

Fig. 1 zeigt eine Überwachungseinheit 1, die aus einer stereoskopischen Kamera 2, einer Verfolgungskamera 3 sowie einem Computer 4 besteht, der als Auswerte- und Steuereinrichtung dient. Die gesamte Überwachungsanlage besteht aus einer Mehrzahl solcher Überwachungseinheiten 1, die einander ergänzen und miteinander netzwerkartig verknüpft sind, wie noch erläutert wird. Gegebenenfalls, z.B. bei Überwachung nur kleinerer Räume, kann die Überwachungsanlage auch aus nur einer solchen Überwachungseinheit bestehen.

Die stereoskopische Kamera 2 besteht aus zwei stereoskopischen Kamerapaaren 2a und 2b und überwacht permanent einen Raum 5. Die stereoskopische Kamera ist hierzu ortsfest und unbeweglich montiert, wobei die Befestigung ausreichend stabil ausgebildet ist, um eine Dejustage infolge von Umwelteinflüssen wie starkem Wind zu verhindern. Zweckmäßigerweise ist eine nicht näher dargestellte Schutzvorrichtung gegen Diebstahl, Demontage und Verschmutzung der Frontscheibe des Kameraschutzgehäuses vorgesehen.

Die Verfolgungskamera 3 ist auf einem nicht näher dargestellten Schwenk/Neigekopf mehrachsig schwenkbar angeordnet. Der Schwenk-/Neigekopf selbst ist ortsfest, so daß die Anordnung der stereoskopischen Kamera 2 und der Verfolgungskamera 3 relativ zueinander - von den möglichen Schwenkbewegungen der Verfolgungskamera 3 abgesehen - nach dem Aufbau der Anlage stets dieselbe ist. Durch eine ausreichend stabile Lagerung der Verfolgungskamera 3 ist eine Dejustage durch Sturm und dergleichen verhindert. Ebenso ist auch für die Verfolgungskamera 3 eine nicht näher dargestellte Schutzvorrichtung vorgesehen, die diese gegen Diebstahl, Demontage und Verschmutzung der Frontscheibe des Kameraschutzgehäuses schützt.

Die Verfolgungskamera 3 kann eine sogenannte CCD-Kamera sein, sie besitzt vorteilhafterweise eine Zoom-Einrichtung zur Veränderung Ihrer Brennweite. Die Zoom-Einrichtung enthält einen entsprechenden motorisierten Antrieb, der von dem Computer 4 aus ansteuerbar ist. Zum Verschwenken der Verfolgungskamera 3 ist ein nicht näher dargestellter Schwenkantrieb vorgesehen, der die Verfolgungskamera 3 mehrachsig verschwenken kann und ebenfalls von dem Computer 4 ansteuerbar ist.

Der Computer 4 ist sowohl mit der stereoskopischen Kamera 2 als auch mit der Verfolgungskamera 3 über entsprechende Datenleitungen 6 und 7 verbunden. Es kann auch eine Funkverbindung, insbesondere ein Funkmodem zur Datenübertragung vorgesehen sein. Die Steuerung der Verfolgungskamera 3 durch den Computer 4 erfolgt über eine serielle Schnittstelle.

Der Computer 4 kann als Industrie-PC mit interner Festplatte, Anzeige- und Bedienperipherie und einer wetterfesten Einhausung ausgebildet sein und mit einem geeigneten netzwerkfähigen Betriebssystem versehen sein. Ferner ist im Computer 4 Software gespeichert, mit Hilfe derer eine Systemkalibrierung und -konfigurierung ermöglicht wird und die Bewegungsdetektion, die Steuerung der Verfolgungskamera 3 und die Bildarchivierung sowie -visualisierung bewerkstelligt werden kann.

Mit Hilfe der stereoskopischen Kamera 2 wird der überwachte Raum 5 in stereoskopische Bilder abgebildet. Die entsprechenden Bilddaten werden dem Computer 4 zugeführt, der aus den stereoskopischen Bildern sich bewegende Objekte in dem Raum 5 detektiert, die jeweilige Raumposition dieser Objekte, ihre reale Größe und Bewegungsgeschwindigkeit automatisch bestimmt. Mit Hilfe der ermittelten Raumposition steuert der Computer 4 die Verfolgungskamera 3 derart, daß sie auf das jeweilige Objekt gerichtet ist und diesem in seiner Bewegung folgt. Die von der Verfolgungskamera 3 gelieferten Bilddaten werden ebenfalls dem Computer 4 zugeführt, der gegebenenfalls die erfaßten Objekte identifiziert. Wird ein erfaßtes Objekt von dem Rechner 4 als relevant identifiziert, ist es beispielsweise ein in den überwachten Raum 5 eingedrungener Mensch, dann werden die entsprechenden Bilddaten, die mit der Verfolgungskamera 3 erfaßt werden, abgespeichert und archiviert und/oder auf einen Überwachungsmonitor gegeben, der z.B. von Sicherheitsdienst-Personal überwacht wird.

Die Erfassung eines Objekts im Raum 5 durch die stereoskopische Kamera 2 kann verschiedenartig bewerkstelligt werden, beispielsweise können zeitlich aufeinanderfolgende Bilder miteinander verglichen werden, so daß sich bewegende Objekte zu identifizieren sind.

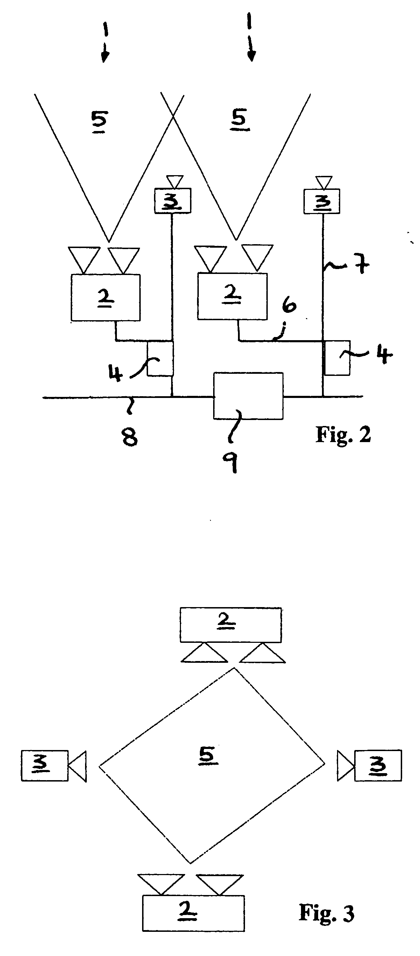

In besonders vorteilhafter Weise sind mehrere solcher an sich autarken Überwachungseinheiten 1 zu einem neuronalen Netzwerk zusammengeschaltet. Fig. 2 zeigt hierbei die Anordnung zweier Überwachungseinheiten 1, die jeweils entsprechend der in Fig. 1 gezeigten Konfiguration ausgebildet sind, so daß für entsprechende Bauteile dieselben Bezugsziffern verwendet worden sind. Es versteht sich, daß die Überwachungsanlage aus mehr als zwei Überwachungseinheiten 1 bestehen kann, die in Fig. 2 nur ausschnittsweise gezeigt sind.

Gemäß Fig. 2 sind die Überwachungseinheiten 1 nebeneinander angeordnet und in parallelen Richtungen gleichsinnig miteinander ausgerichtet, d.h. die überwachten Räume 5 liegen nebeneinander und die zugehörigen stereoskopischen Kameras 2 blicken in dieselbe Richtung.

Gemäß Fig. 3 kann die Anordnung der stereoskopischen Kameras entgegengesetzt getroffen sein, d.h. die stereoskopische Kameras blicken in entgegengesetzte Richtungen und sind einander versetzt gegenüberliegend angeordnet (vgl. Fig. 3). Auch hier ist jeder der stereoskopischen Kameras 2 eine Verfolgungskamera 3 zugeordnet.

Die Überwachungseinheiten 1, die nebeneinanderliegende Räume 5 beobachten, sind miteinander über Datenleitungen 8 verknüpft, die als Funkleitungen ausgebildet sein können. Dazwischengeschaltet ist ein Steuerrechner 9, der die Datenübergabe zwischen den verschiedenen Überwachungseinheiten 1 steuert und für die Umschaltung zwischen den einzelnen Überwachungseinheiten 1 sorgt. Gegebenenfalls kann ein solcher Steuerrechner für eine Vielzahl von Überwachungseinheiten 1 vorgesehen sein. Zweckmäßigerweise ist die Vernetzung jedoch gänzlich dezentral organisiert, d.h. zwischen jeweils benachbarte Überwachungseinheiten 1 ist ein separater Steuerrechner 9 geschaltet.

Mit Hilfe des Steuerrechners 9 werden Bilddaten und daraus gewonnene Informationen wie Raumposition, Größe und Geschwindigkeit eines in einem überwachten Raum 5 erfaßten Objekts in Abhängigkeit der Bewegungsrichtung dieses Objekts an die nächstliegende Überwachungseinheit 1 weitergegeben, wenn bzw. kurz bevor das entsprechende Objekt die Sektorengrenze überschreitet und von dem einen überwachten Raum 5 in den nächsten überwachten Raum 5 wechselt. Die verschiedenen Überwachungseinheiten 1 lernen also voneinander, die Informationen, die von einer Überwachungseinheit 1 gewonnen wurden, werden in anderen Überwachungseinheiten 1 weiterverarbeitet. Hierdurch wird insbesondere die gesamte Anlage schneller, bei Überschreiten einer Sektorengrenze braucht die Sensorik der nächsten Überwachungseinheit 1 nicht mehr mit der Erfassung des Objekts von vorne beginnen, die Einstellungen beispielsweise der Verfolgungskamera 3 können bereits vorher aufgrund der in der vorhergehenden Überwachungseinheit 1 bereits gewonnenen Daten vorgenommen werden.

## Patentansprüche

1. Überwachungsanlage mit einer stereoskopischen Kamera (2) zur Erfassung stereoskopischer Bilder eines überwachten Raumes (5), einer Verfolgungskamera (3), einer Schwenkvorrichtung zum Schwenken der Verfolgungskamera, einer Einrichtung zur Bestimmung der Raumposition eines erfaßten Objekts aus den stereoskopischen Bildern und einer Steuereinrichtung (4) zur Ansteuerung der Schwenkvorrichtung in Abhängigkeit der erfaßten Raumposition derart, daß die Verfolgungskamera (3) das erfaßte Objekt verfolgt.

2. Überwachungsanlage nach dem vorhergehenden Anspruch, wobei die Verfolgungskamera (3) eine Zoom-Einrichtung zur Brennweiteneinstellung aufweist, eine Einrichtung zur Bestimmung der Größe des erfaßten Objekts vorgesehen ist und die Steuereinrichtung (4) die Zoom-Einrichtung in Abhängigkeit der bestimmten Größe und/oder Raumposition des erfaßten Objekts ansteuert.

3. Überwachungsanlage nach einem der vorhergehenden Ansprüche, wobei eine Einrichtung zur Bestimmung der Bewegungsgeschwindigkeit des erfaßten Objekts vorgesehen ist, und die Steuereinrichtung (4) die Verfolgungskamera (3) in Abhängigkeit der bestimmten Bewegungsgeschwindigkeit ansteuert.

4. Überwachungsanlage nach einem der vorhergehenden Ansprüche, wobei eine Mehrzahl von stereoskopischen Kameras (2) und diesen zugeordneten Verfolgungskameras (3) vorgesehen sind, wobei vorzugsweise die stereoskopischen Kameras (2) derart angeordnet sind, daß die von diesen überwachten Räume (5) einander ergänzen und/oder sich überschneiden.

5. Überwachungsanlage nach dem vorhergehenden Anspruch, wobei die stereoskopischen Kameras (2) und Verfolgungskameras (3) untereinander durch ein dezentrales, neuronales Netz verknüpft sind.

6. Überwachungsanlage nach einem der beiden vorhergehenden Ansprüche, wobei verschiedenen stereoskopischen Kameras (2) und diesen zugeordneten Verfolgungskameras (3) jeweils eine separate Steuereinrichtung (4) zugeordnet ist, die miteinander verknüpft sind.

7. Überwachungsanlage nach einem der beiden vorhergehenden Ansprüche, wobei das neuronale Netz derart ausgebildet ist, daß Bilddaten einer stereoskopischen Kamera (2) und/oder einer Verfolgungskamera (3) an eine nächstgelegene stereoskopische Kamera (2) und/oder Verfolgungskamera (3) in Abhängigkeit der Bewegungsrichtung des erfaßten Objekts weitergegeben werden.

8. Überwachungsanlage nach einem der vorhergehenden Ansprüche, wobei ein Paar benachbarte stereoskopische Kameras (2) nebeneinander in zueinander parallelen Richtungen ausgerichtet sind.

9. Überwachungsanlage nach einem der vorhergehenden Ansprüche, wobei ein Paar benachbarte stereoskopische Kameras gegenüberliegend und zueinander entgegengerichtet angeordnet sind.

10. Überwachungsanlage nach einem der vorhergehenden Ansprüche, wobei Beleuchtungsmittel zur Beleuchtung des überwachten Raumes (5) vorgesehen sind, die frei von Helligkeitsschwankungen sind.

11. Überwachungsanlage nach einem der vorhergehenden Ansprüche, wobei eine Verfolgungskamera-Schwenkgeschwindigkeit derart gesteuert ist, daß sie einer Bildauswerterate bei der Auswertung der stereoskopischen Bilder entspricht.

12. Überwachungsanlage nach einem der vorhergehenden Ansprüche, wobei die Steuereinrichtung, die Einrichtung zur Bestimmung der Raumposition des erfaßten Objekts, die Einrichtung zur Bestimmung der Größe des erfaßten Objekts und/oder die Einrichtung zur Bestimmung der Bewegungsgeschwindigkeit des erfaßten Objekts als Rechner und darin geladene Software ausgebildet sind.

13. Überwachungsanlage nach einem der vorhergehenden Ansprüche, wobei eine Benutzerschnittstelle zur Spezifizierung eines Verfolgungsmodus vorgesehen ist.
